Europäisches Patentamt

European Patent Office

Office européen des brevets

(11) Numéro de publication: **0 499 171 A1**

# (12) DEMANDE DE BREVET EUROPEEN

(21) Numéro de dépôt: **92102179.6**

(22) Date de dépôt: **10.02.92**

(51) Int. Cl.5: **H04B 10/08**, G01M 11/00

---

(30) Priorité: **13.02.91 FR 9101665**

(43) Date de publication de la demande:
**19.08.92 Bulletin 92/34**

(84) Etats contractants désignés:
**CH DE FR GB IT LI NL SE**

(71) Demandeur: **ALCATEL CABLE**
**30, rue des Chasses**
**F-92111 Clichy Cédex(FR)**

(72) Inventeur: **Tache, Jean-Paul**
**Chemin du Vernay, Saint Laurent d'Agny**
**F-69440 Mornant(FR)**
Inventeur: **Forissier, Christian**
**13B, avenue Jules Ferry**
**F-42400 Saint Chamond(FR)**

(74) Mandataire: **Weinmiller, Jürgen et al**
**Lennéstrasse 9 Postfach 24**
**W-8133 Feldafing(DE)**

---

(54) **Système de localisation de reflexions de fresnel le long d'une fibre optique.**

(57) Système de localisation de réflexions de Fresnel le long d'une fibre optique, caractérisé en ce qu'il comprend :
- des moyens d'émission d'impulsions optiques couplées à la face d'entrée de la fibre,
- des moyens (20) de réception et de transformation en signaux électriques des signaux réfléchis par la fibre,
- des moyens (20) de sélection parmi les signaux électriques des seuls signaux électriques correspondant à des réflexions de Fresnel,
- des moyens de comparaison (23, 25, 26) couplés aux moyens (20) de sélection et recevant un signal de référence de comparaison traduisant le rang de l'une des réflexions de Fresnel choisies arbitraitement,
- des moyens (13, 21, 22, 24, 26) d'évaluation couplés aux moyens (23, 25, 26) de comparaison et aux moyens (20) de sélection pour situer sur la fibre le point ayant donné naissance à la réflexion de Fresnel choisie arbitrairement.

FIG.4

EP 0 499 171 A1

La présente invention a pour objet un système de localisation de réflexions de Fresnel le long d'une fibre optique, destiné en particulier à mesurer la longueur de fibres optiques et localiser des cassures le long de ces fibres, notamment pour des applications de maintenance des câbles de communications.

Lorsqu'on envoie une impulsion lumineuse le long d'une fibre optique, on reçoit en retour à l'entrée de la fibre deux types de réflexions :

- les réflexions dues à la rétrodiffusion de Rayleigh au niveau des cristaux de silice ; la puissance lumineuse maximum de ces réflexions se situe à 40dB environ sous la puissance lumineuse de l'impulsion incidente,
- les réflexions dues aux extrémités (faces avant et arrière) de la fibre, ainsi qu'aux connecteurs fortement réfléchissants situés le long de la fibre : ce sont les réflexions de Fresnel ; la puissance maximum de ces réflexions se situe à 14dB environ sous la puissance lumineuse de l'impulsion incidente.

Pour mesurer la longueur d'une fibre optique (ou localiser le lieu d'une cassure, ce qui revient au même), il faut détecter la réflexion de Fresnel due à la face arrière de la fibre testée.

Deux méthodes, peuvent alors être utilisées.

La première méthode utilise le principe de réflectométrie, fondé sur la rétrodiffusion de Rayleigh. On injecte une impulsion lumineuse le long de la fibre optique à tester, en général par l'intermédiaire d'une "fibre amorce" dont on connaît exactement la longueur, et que l'on soude à la face avant de la fibre à tester. En effet, la réflexion de Fresnel due à la face avant de la fibre a une amplitude très élevée car la lumière la constituant n'a pas pénétré dans la fibre et n'a donc par conséquent pratiquement pas été atténuée. Ceci entraîne une saturation du système de détection du réflectomètre ; pendant le temps de désaturation, appelé également zone morte, aucun signal ne peut être détecté, ce qui est bien évidemment préjudiciable au bon fonctionnement de l'appareil. L'utilisation d'une fibre amorce dont la longueur est suffisante pour permettre la désaturation a pour but de pallier ce problème.

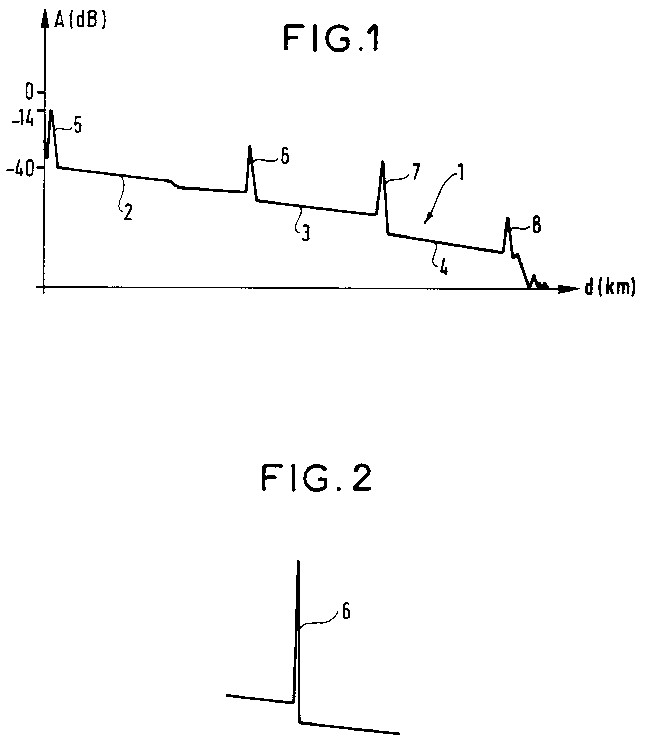

Les signaux réfléchis par la fibre permettent ensuite de tracer la courbe de réflectométrie. Une courbe de réflectométrie (voir figure 1) fournit l'atténuation A en dB le long de la fibre, en fonction de la distance d (en km). Les deux types de réflexions mentionnés plus haut apparaissent sur la courbe 1. Les paliers 2, 3 et 4 correspondent aux rétrodiffusions de Rayleigh dues aux cristaux de silice. Les pics 6 et 7 correspondent aux réflexions de Fresnel dues à des connecteurs réfléchissants situés le long de la fibre ou de la fibre amorce. Le pic 5 correspond à la réflexion de Fresnel due à la face avant de la fibre. Le pic 8 correspond à la réflexion de Fresnel due à la cassure de la fibre.

Les appareils de réflectométrie sont principalement utilisés pour déterminer les caractéristiques d'atténuation des fibres optiques. Il est également possible d'utiliser la réflectométrie pour localiser le long d'une fibre optique les points ayant donné naissance à des réflexions de Fresnel. Cependant, cette utilisation pose plusieurs problèmes.

En premier lieu, il faut que la puissance optique couplée injectée dans la fibre soit suffisante pour que l'énergie rétrodiffusée (qui est à -40dB) puisse être détectée. Or, la puissance injectée est directement proportionnelle à la surface de l'impulsion laser. Comme il n'est pas possible d'augmenter sans limite la puissance émise par le laser, il est donc nécessaire de travailler avec des impulsions larges afin d'obtenir la puissance optique désirée. Cependant, la résolution en distance de l'appareil est meilleure lorsque la largeur de l'impulsion est faible. La nécessité d'un seuil minimal de puissance à l'émission implique donc une résolution en distance médiocre (de l'ordre de 1m) et une zone morte d'environ 40m.

Par ailleurs, une fois la courbe de réflectométrie affichée sur l'écran de l'appareil, on doit, pour localiser le point ayant donné naissance à une réflexion de Fresnel, déplacer un curseur de repérage au début de la montée du pic de Fresnel étudié. Or, la courbe 1 montrée à la figure 1 représente en fait, pour des besoins de clarté, une vue dilatée de ce qui est en pratique obtenu, et l'on voit plutôt, au niveau de chaque pic de Fresnel, la portion de courbe telle que représentée à la figure 2. Il est donc nécessaire de dilater l'échelle horizontale au niveau du pic de Fresnel étudié, afin de placer le curseur exactement au début de la montée de ce pic. Une fois ces deux opérations effectuées, on obtient la distance souhaitée grâce à une fonction intégrée de l'appareil.

Si l'on veut déterminer la distance entre deux points ayant donné naissance à des réflexions de Fresnel, le principe de mesure est similaire en utilisant deux curseurs respectivement placés au niveau de chacun des deux pics étudiés.

Ainsi, d'une part, les mesures de distance ne sont pas effectuées en temps réel mais après affichage de la courbe puis conversion analogique/digitale du signal pour traitement par le microprocesseur, et d'autre part, la suite des opérations à réaliser est relativement longue et nécessite un personnel qualifié. Il est donc peu commode d'utiliser un réflectomètre pour des vérifications rapides sur un chantier, d'autant plus que c'est un appareil volumineux, très onéreux, et destiné en réalité à fournir des caractéristiques (bilan global) de la fibre inutiles au stade de maintenance des câbles de communications, stade auquel la première nécessité est la détection de coupure d'une liaison (équivalent de l'ohm-mètre pour le fil de cuivre). Le réflectomètre n'est donc pas l'appareil le mieux adapté.

On pourrait alors utiliser une seconde méthode de détection des pics de Fresnel, relevant du principe de l'échométrie. En échométrie, on ne s'intéresse qu'aux pics de Fresnel, c'est-à-dire que l'on ne détecte que les réflexions supérieures à un certain seuil. Il n'est donc plus primordial d'avoir une puissance optique injectée aussi importante qu'en réflectométrie. Par conséquent, on peut utiliser des impulsions étroites, ce qui confère à l'appareil une faible zone morte (de l'ordre de 2m) et contribue à l'obtention d'une bonne résolution en distance (de l'ordre de 25cm).

Etant donné que l'on ne conserve que les signaux d'amplitude détectable, il n'est pas nécessaire d'utiliser un amplificateur sophistiqué (largeur de bande, gain...), ce qui diminue le coût de l'appareil par rapport à un réflectomètre.

Le principe de l'échomètre est le suivant : on injecte à l'entrée de la fibre (en silice par exemple), ou de la fibre amorce, une impulsion laser étroite et de forte amplitude, et on déclenche au même moment le comptage d'une horloge. La première réflexion de Fresnel détectée arrête le comptage. Connaissant l'indice de réfraction de la silice composant la fibre, et à l'aide du temps indiqué par l'horloge, un microprocesseur calcule la distance entre la face avant de la fibre et le premier point de la fibre donnant naissance à une réflexion de Fresnel. Cette mesure est effectuée en temps réel (le temps compté par l'horloge est automatiquement et simultanément transformé en longueur par l'appareil), en une seconde environ.

On comprend alors le problème posé par l'utilisation d'un tel appareil : si la fibre testée ne comporte aucun connecteur réfléchissant, le pic de Fresnel détecté est bien celui correspondant à sa face arrière ; mais si la fibre possède des connecteurs situés avant sa face arrière, il est impossible de détecter le pic de Fresnel correspondant puisque l'horloge sera bloquée après le retour de la première réflexion de Fresnel due au premier connecteur.

La présente invention a donc pour but de réaliser un système de localisation des pics de Fresnel le long d'une fibre optique permettant des mesures rapides notamment de longueur de fibres (pour en détecter la casse, en particulier) en présence de connecteurs réfléchissants ; en outre, la présente invention a pour but de réaliser un tel système qui soit simple à utiliser, peu onéreux et peu encombrant afin d'être utilisé par exemple sur des chantiers de pose de câbles à fibres optiques ou pour la maintenance en immeuble câblé.

La présente invention propose à cet effet un système de localisation de réflexions de Fresnel le long d'une fibre optique caractérisé en ce qu'il comprend :

- des moyens d'émission d'impulsions optiques couplées à la face d'entrée de ladite fibre,
- des moyens de réception et de transformation en signaux électriques des signaux réfléchis par ladite fibre,
- des moyens de sélection parmi lesdits signaux électriques des seuls signaux électriques correspondant à des réflexions de Fresnel,
- des moyens de comparaison couplés auxdits moyens de sélection et recevant un signal de référence de comparaison traduisant le rang de l'une desdites réflexions de Fresnel, choisie arbitrairement,
- des moyens d'évaluation couplés auxdits moyens de comparaison et auxdits moyens de sélection pour situer sur ladite fibre le point ayant donné naissance à ladite réflexion de Fresnel choisie arbitrairement.

Selon une caractéristique importante, les moyens d'émission comprennent un laser commandé par un générateur d'impulsions électriques, et un coupleur optique placé entre le laser et la face d'entrée de la fibre, chaque impulsion du générateur déclenchant en outre, le départ du comptage d'une horloge haute-fréquence.

Selon une autre caractéristique importante, les moyens de sélection comportent au niveau des moyens de réception et de transformation, un seuil d'amplitude minimale que doivent dépasser les signaux électriques afin d'être transmis aux moyens de comparaison, ce seuil étant supérieur à l'amplitude du signal électrique correspondant à la rétrodiffusion de Rayleigh de puissance maximale.

De manière très avantageuse, les moyens de comparaison comprennent un premier compteur dont la sortie est envoyée sur un comparateur, et un microprocesseur également relié au comparateur.

De plus, les moyens d'évaluation comprennent :

- une horloge transmettant ses impulsions à une porte dès la première impulsion optique,
- une bascule D dont l'entrée de précondition est reliée aux moyens de réception et de transformation, dont l'entrée de validation de l'état préconditionné est reliée à la sortie des moyens de comparaison, et dont la sortie est envoyée sur la porte,
- un second compteur dont l'entrée est reliée à la porte et dont la sortie est reliée à un microprocesseur.

Selon un premier mode de fonctionnement, pour localiser une des réflexions de Fresnel choisie arbitrairement, le rang dit N de la réflexion de Fresnel précèdant la réflexion de Fresnel choisie est codé et entré sous forme de mot binaire, de sorte que, la porte étant ouverte depuis la première impulsion optique émise :

- lorsque la N -ième réflexion de Fresnel est détectée, le comparateur valide la bascule D.
- lorsque la N + 1 -ième réflexion de Fresnel est détectée, le signal électrique correspondant bloque la porte, arrêtant par là-même le second compteur, qui transmet le nombre d'impulsions-horloge qu'il a reçues depuis le départ au microprocesseur, le microprocesseur calculant alors la distance séparant la face d'entrée de la fibre du point ayant donné naissance à la réflexion de Fresnel choisie.

Selon un second mode de fonctionnement, le microprocesseur comporte des moyens auxiliaires pour localiser, à la suite de la localisation de la N + 1 -ième réflexion de Fresnel, une nouvelle réflexion de Fresnel de rang N + P en renouvelant le traitement pour le rang N + P de cette nouvelle réflexion de Fresnel et en déterminant alors par différence la distance entre les points ayant donné naissance aux N + 1 -ième et N + P -ième réflexions de Fresnel choisies.

En outre, il est possible de coupler une fibre amorce, de longueur connue, à la face d'entrée de la fibre optique ; cette fibre amorce reçoit les impulsions optiques qu'elle transmet à la fibre optique testée.

L'horloge HF utilisée peut être une horloge à quartz ; les moyens de réception et de transformation peuvent être constitués d'une photodiode. Ils peuvent, de plus, être munis d'un amplificateur à seuil pour effectuer la sélection des réflexions de Fresnel.

Enfin, le système selon l'invention peut comporter un sous-système de moyennage de plusieurs mesures consécutives, et des moyens de réinitialisation générale avant l'émission de chaque nouvelle impulsion optique injectée dans la fibre.

D'autres caractéristiques et avantages de la présente invention apparaîtront au cours de la description suivante d'un appareil utilisant le système de localisation de réflexions de Fresnel selon l'invention, donnée à titre illustratif mais nullement limitatif. Dans les figures suivantes :

- la figure 3 représente schématiquement par blocs un appareil selon l'invention,

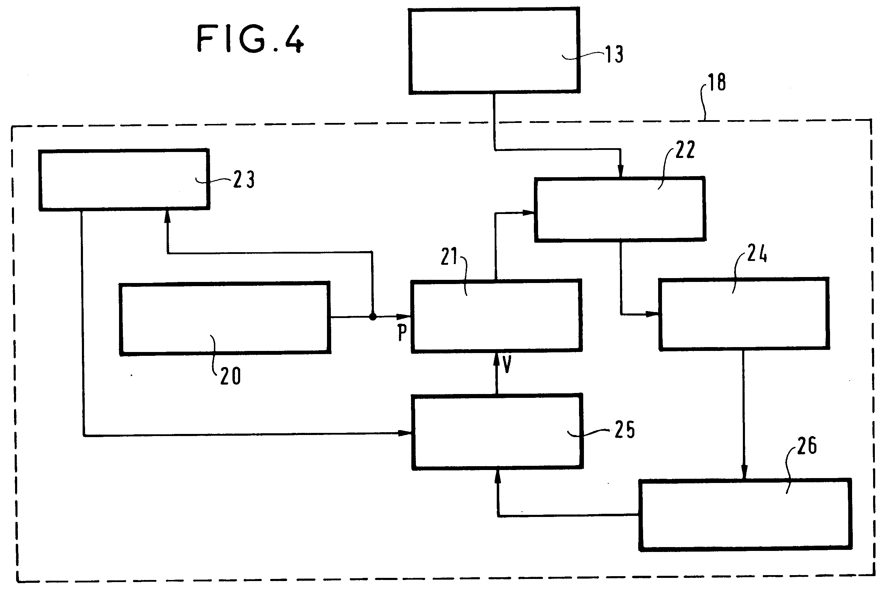

- la figure 4 montre un schéma synoptique du bloc de détection et de mesure de la figure 3.

Dans ces figures, les éléments communs sont référencés avec les mêmes numéros.

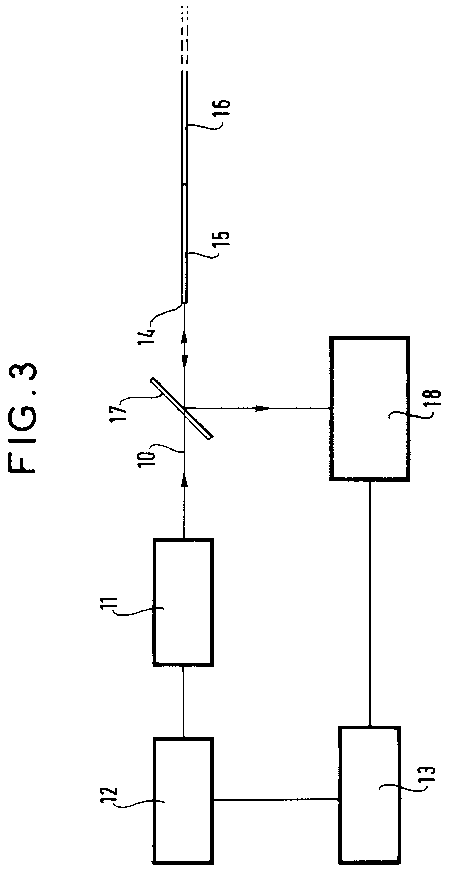

Dans la figure 3, une impulsion optique incidente 10 émise par un laser 11 sous l'action d'un générateur d'impulsions électriques 12 déclenchant également le comptage d'une horloge HF 13 est envoyée sur la face avant d'entrée 14 d'une fibre amorce 15 soudée à une fibre optique 16, par l'intermédiaire d'un coupleur optique 17. Les réflexions obtenues sont ensuite dirigées par le coupleur 17 sur un système de détection et de mesure 18.

Le bloc de détection et de mesure 18 comprend plus particulièrement un récepteur optique 20, tel qu'une photodiode munie d'un amplificateur à seuil par exemple, une bascule D 21, une porte 22, deux compteurs 23 et 24, un comparateur 25 et un microprocesseur 26.

L'entrée de précondition P de la bascule 21 est reliée au récepteur optique 20, et son entrée de validation V de l'état préconditionné à la sortie du comparateur 25.

On va maintenant s'attacher à décrire, toujours à titre illustratif, deux modes de fonctionnement de l'appareil réalisé, qui permettent de mieux comprendre l'invention.

Tout d'abord et avant l'utilisation, pour la mesure, de l'appareil, il est nécessaire de fixer le seuil minimal de détection de la photodiode, afin de ne pas détecter les signaux rétrodiffusés. Pour cela, on prend comme référence la puissance rétrodiffusée par la face avant 14 après une impulsion lumineuse ; cette puissance est la puissance maximale rétrodiffusée, que l'on mesure à l'aide d'un réflectomètre par exemple. On fixe alors une fois pour toutes le seuil de détection de l'appareil selon l'invention au-dessus du niveau de cette puissance. Ceci permet de ne détecter que les réflexions de Fresnel. On peut alors passer à l'utilisation proprement dite de l'appareil.

Selon un premier mode de fonctionnement, il est possible de localiser une réflexion de Fresnel donnée (celle de rang N + 1 par exemple, avec N > 1) par rapport à la face avant de la fibre (ou à la face avant de la fibre amorce dont on connaît la longueur).

On entre alors la valeur N en mémoire dans le microprocesseur 26.

Grâce à une commande manuelle au niveau du microprocesseur, la première impulsion optique est envoyée dans la fibre. De manière simultanée, la porte 22 est ouverte.

Ainsi à partir de la première impulsion optique, l'horloge 13 transmet en continu, par l'intermédiaire de la porte 22, des impulsions de mesure de temps au compteur 24. L'injection d'impulsions optiques dans la fibre a lieu périodiquement avec une période suffisante pour que la dernière réflexion de Fresnel due à la face arrière de la fibre parvienne à la photodiode 20.

Lorsque la première réflexion de Fresnel est détectée par la photodiode 20, le compteur 23 (à zéro au départ), est incrémenté de 1. Cette valeur est comparée, au niveau du comparateur 25, à un signal électrique de référence de comparaison sous forme de mot binaire codant la valeur de N entrée préalablement en mémoire. Comme N est strictement supérieur à 1, la sortie du comparateur 25 ne change pas et le compteur 24 fonctionne donc toujours sous l'impulsion de l'horloge 13. Le fonctionnement est le même jusqu'à la N-1 -ième réflexion de Fresnel détectée.

Lorsque la N -ième réflexion de Fresnel est détectée par la photodiode 20, le comparateur 25 valide la bascule 21. La N+1 -ième réflexion bloque alors la porte 22 et le compteur 24 ne reçoit plus les impulsions transmises par l'horloge 13. Par conséquent, le compteur 24 s'arrête en ayant enregistré le temps $t_1$ écoulé entre l'émission de l'impulsion initiale et la détection de la N+1 -ième réflexion de Fresnel. Cette valeur est alors lue par le microprocesseur 26 qui, connaissant l'indice de réfraction de la fibre testée et la longueur de la fibre amorce, transforme ce temps $t_1$ en longueur $l_1$ sur la fibre. Une réinitialisation (ou reset) des compteurs est prévue avant chaque activation et rend le circuit disponible pour une nouvelle mesure.

Le rôle fondamental de la bascule D employée est de provoquer un retard défini par l'intervalle entre la réflexion de Fresnel choisie et celle qui la précède.

On peut ensuite effectuer plusieurs autres mesures similaires (10, par exemple). Le microprocesseur garde en mémoire les valeurs $t_1$,..., $t_{10}$, calcule les longueurs $l_1$,..., $l_{10}$ correspondantes, leur moyenne et leur écart type, et affiche ces deux valeurs. Il peut en outre signaler une erreur lorsque l'écart type dépasse une valeur limite fixée initialement. Ainsi, si la réflexion de Fresnel localisée correspond à un connecteur défectueux, qui renvoie à chaque mesure une réponse différente, l'écart type dépasse la valeur limite et l'appareil signale une erreur, ce qui permet de repérer le raccord défectueux et de le réparer.

Mis à part ce dernier perfectionnement important, l'appareil selon l'invention permet donc de localiser une réflexion de Fresnel donnée (c'est-à-dire un connecteur, une extrémité de fibre ou une cassure) sans être gêné par les réflexions de Fresnel précédentes éventuelles comme c'est le cas avec les échomètres. L'appareil selon l'invention présente en outre les avantages connus des échomètres de l'art antérieur, c'est-à-dire :

- rapidité de mesure, de l'ordre de la seconde, obtenue grâce à un système fonctionnant en temps réel ;
- grande résolution en distance ( point donnant naissance à une réflexion de Fresnel localisé à 25cm près environ) ;
- faible coût (environ 10 fois moins cher qu'un réflectomètre);
- faible encombrement (comparable à celui d'un voltmètre ordinaire).

Ce premier mode de fonctionnement permet donc de localiser une réflexion de Fresnel par rapport à la face avant de la fibre optique testée. Ceci permet par exemple de mesurer la longueur d'une fibre (en détectant le dernier pic de Fresnel dû à la face arrière de la fibre). Cette mesure peut être utilisée intrinsèquement, ou par comparaison avec la longueur connue de la fibre à tester afin de déterminer s'il y a une cassure. On peut aussi grâce à ce système, vérifier l'emplacement des connecteurs réfléchissants ainsi que leur état. Ce premier mode de fonctionnement permet donc des mesures de distance absolues.

Selon un second mode de fonctionnement, on peut effectuer des mesures de distance relatives, par exemple entre deux connecteurs, ou entre un connecteur et une des faces extrêmes de la fibre.

Pour mesurer la distance entre les points ayant donné naissance à la N+1 -ième et à la N+P -ième (P > 1) réflexion de Fresnel, on entre préalablement en mémoire dans le microprocesseur la valeur N. Le comptage est effectué selon le premier mode de fonctionnement pour déterminer la distance entre la face avant de la fibre et le point ayant donné naissance à la N+1 -ième réflexion de Fresnel. Le résultat est alors mis en mémoire dans le microprocesseur 26. Puis, on entre en mémoire la valeur N+P-1 dans le microprocesseur et, toujours selon le premier mode de fonctionnement, on renouvèle le même traitement et on détermine la distance entre la face avant de la fibre et le point ayant donné naissance à la N+P -ième réflexion de Fresnel. Cette seconde valeur est également mise en mémoire dans le microprocesseur 26. Enfin, le microprocesseur 26 calcule la distance entre les points ayant donné naissance aux N+1 -ième et N+P -ième réflexions de Fresnel par différence entre les deux valeurs enregistrées.

Les avantages de ce second mode de fonctionnement sont identiques à ceux du premier.

Dans ces deux modes de fonctionnement, il est nécessaire de valider la porte à la réflexion de Fresnel précédant celle que l'on veut localiser. En effet, il n'est pas possible, à cause du temps de réaction des divers composants électroniques du circuit, d'arrêter instantanément le comptage au niveau de la réflexion à détecter : compte tenu de la fréquence de l'horloge HF qui est de l'ordre de 200 MHz, cela introduirait une erreur systématique.

Bien entendu, l'invention n'est pas limitée à l'appareil ni aux modes de fonctionnement qui viennent d'être décrits.

En particulier, dans le second mode de fonctionnement, il est possible, en utilisant une logique plus complexe que la bascule D, comportant un compteur, de mesurer directement la distance entre la N + 1 -ième et la N + P -ième réflexion de Fresnel.

Enfin, on pourra remplacer tout moyen par un moyen équivalent sans sortir du cadre de l'invention.

**Revendications**

1. Système de localisation de réflexions de Fresnel le long d'une fibre optique (16) caractérisé en ce qu'il comprend :
   - des moyens (11, 12, 17) d'émission d'impulsions optiques (10) couplées à la face d'entrée (14) de ladite fibre (16),
   - des moyens (20) de réception et de transformation en signaux électriques des signaux réfléchis par ladite fibre,
   - des moyens (20) de sélection parmi lesdits signaux électriques des seuls signaux électriques correspondant à des réflexions de Fresnel,
   - des moyens de comparaison (23, 25, 26) couplés auxdits moyens (20) de sélection et recevant un signal de référence de comparaison traduisant le rang de l'une desdites réflexions de Fresnel, choisie arbitrairement,
   - des moyens d'évaluation (13, 21, 22, 24, 26) couplés auxdits moyens de comparaison et auxdits moyens de sélection pour situer sur ladite fibre (16) le point ayant donné naissance à ladite réflexion de Fresnel choisie arbitrairement.

2. Système selon la revendication 1, caractérisé en ce que lesdits moyens d'émission comprennent un laser (11) commandé par un générateur d'impulsions électriques (12), et un coupleur optique (17) placé entre ledit laser (11) et la face d'entrée (14) de ladite fibre optique (16), chaque impulsion dudit générateur (12) déclenchant en outre le départ du comptage d'une horloge haute-fréquence (13).

3. Système selon l'une des revendications 1 et 2, caractérisé en ce que lesdits moyens de sélection comportent, au niveau desdits moyens (20) de réception et de transformation, un seuil d'amplitude minimale que doivent dépasser lesdits signaux électriques afin d'être transmis auxdits moyens de comparaison (23, 25, 26) ledit seuil étant supérieur à l'amplitude du signal électrique correspondant à la rétrodiffusion de Rayleigh de puissance maximale.

4. Système selon l'une des revendications 1 à 3, caractérisé en ce que lesdits moyens de comparaison comprennent un premier compteur (23) dont la sortie est envoyée sur un comparateur (25), et un microprocesseur (26) également relié audit comparateur (25).

5. Système selon l'une des revendications 1 à 4, caractérisé en ce que lesdits moyens d'évaluation comprennent :
   - une horloge (13) transmettant ses impulsions à une porte (22) dès la première impulsion optique,
   - une bascule D (21) dont l'entrée de précondition (P) est reliée auxdits moyens (20) de réception et de transformation, dont l'entrée de validation (V) de l'état préconditionné est reliée à la sortie desdits moyens (23, 25, 26) de comparaison et dont la sortie est envoyée sur ladite porte (22),
   - un second compteur (24) dont l'entrée est reliée à ladite porte (22) et dont la sortie est reliée à un microprocesseur (26).

6. Système selon les revendications 4 et 5, caractérisé en ce que, pour localiser ladite réflexion de Fresnel choisie arbitrairement, le rang dit N, de la réflexion de Fresnel précédant ladite réflexion de Fresnel choisie est entré et codé sous forme de mot binaire dans ledit microprocesseur (26), de sorte que, ladite porte (22) étant ouverte depuis la première impulsion optique émise :
   - lorsque ladite N -ième réflexion de Fresnel est détectée, ledit comparateur (25) valide ladite bascule D,
   - lorsque ladite N + 1 -ième réflexion de Fresnel est détectée, le signal électrique correspondant bloque ladite porte (22), arrêtant par là-même ledit second compteur (24), qui transmet alors le nombre d'impulsions-horloge qu'il a reçues depuis le départ audit microprocesseur (26), ledit microprocesseur (26) calculant alors la distance séparant la face d'entrée (14) de ladite fibre du point ayant donné naissance à ladite réflexion de Fresnel choisie.

7. Système selon la revendication 6, caractérisé en ce que ledit microprocesseur comporte des moyens auxiliaires pour localiser, à la suite de la localisation de ladite N + 1 -ième réflexion de Fresnel, une nouvelle réflexion de Fresnel de rang dit N + P en renouvelant le traitement pour le rang N + P de cette nouvelle réflexion de Fresnel et en déterminant alors par différence la distance entre les points ayant donné naissance auxdites N + 1 -ième et N + P -ième réflexions de Fresnel choisies.

8. Système selon l'une des revendications 1 à 7, caractérisé en ce qu'une fibre optique (15) dite amorce, de longueur connue, est couplée à ladite face d'entrée de ladite fibre optique (16) et reçoit lesdites impulsions optiques (10) qu'elle transmet à ladite fibre optique (16).

9. Système selon les revendications 2 et 5, caractérisé en ce que ladite horloge HF (13) est une horloge à quartz.

10. Système selon l'une des revendications 1 à 9, caractérisé en ce que lesdits moyens (20) de réception et de transformation sont constitués d'une photodiode.

11. Système selon l'une des revendications 1 à 10, caractérisé en ce que lesdits moyens (20) de réception et de transformation sont munis d'un amplificateur à seuil pour effectuer ladite sélection.

12. Système selon l'une des revendications 1 à 11, caractérisé en ce qu'il comporte un sous-système de moyennage de plusieurs mesures consécutives.

13. Système selon l'une des revendications 1 à 12, caractérisé en ce qu'il comporte des moyens de réinitialisation générale avant l'émission de chaque nouvelle impulsion optique.

## FIG.1

## FIG.2

# FIG.3

EP 0 499 171 A1

FIG.4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | PATENT ABSTRACTS OF JAPAN vol. 14, no. 321 (P-1074)(4264) 10 Juillet 1990 & JP-A-2 105 033 ( FUJIKURA ) * le document en entier * | 1,2 | H04B10/08 G01M11/00 |
| A | FR-A-2 517 826 (RE INSTRUMENTS) * revendications 1,2; figure 3 * | 1-5 | |
| A | LASER FOCUS. vol. 24, no. 12, Décembre 1988, TULSA US pages 129 - 134; S.K.DAS ET AL: 'Optical Time-Domain and CW techniques measure lightwave reflectance' * page 130, colonne de gauche, dernier alinéa - page 132, colonne de droite, alinéa 2; figures 1-3 * | 1-3 | |
| A | US-A-4 021 121 (SCHICKETANZ) * colonne 1, ligne 19 - ligne 44 * | 1,2,4 | |
| A | DE-A-3 927 293 (ANT) * colonne 1, ligne 38 - ligne 55 * | 1 | **DOMAINES TECHNIQUES RECHERCHES (Int. Cl.5)** H04B G01M |

Le présent rapport a été établi pour toutes les revendications

| Lieu de la recherche | Date d'achèvement de la recherche | Examinateur |
|---|---|---|
| LA HAYE | 13 MAI 1992 | GOUDELIS M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

EPO FORM 1503 03.82 (P0402)